Europäisches Patentamt

European Patent Office

Office européen des brevets

(11) Veröffentlichungsnummer: **0 321 937**
**A2**

## (12) EUROPÄISCHE PATENTANMELDUNG

(21) Anmeldenummer: 88121346.6

(22) Anmeldetag: 21.12.88

(51) Int. Cl.⁴: **G11B 23/023**

(30) Priorität: 22.12.87 DE 3743481

(43) Veröffentlichungstag der Anmeldung:
28.06.89 Patentblatt 89/26

(84) Benannte Vertragsstaaten:
**DE FR GB IT**

(71) Anmelder: **idn inventions and development of novelties ag**
**Hartbertstrasse 9**
**CH-7002 Chur(CH)**

(72) Erfinder: **Ackeret, Peter**
**Allmendstrasse 18**
**CH-8700 Küsnacht(CH)**

(74) Vertreter: **Dipl.-Ing. H. Marsch Dipl.-Ing. K.**
**Sparing Dipl.-Phys.Dr. W.H. Röhl**
**Patentanwälte**
**Rethelstrasse 123**
**D-4000 Düsseldorf 1(DE)**

(54) Behälter zur Aufbewahrung von Magnetbandkassetten.

(57) Behälter für DAT-Kassetten, insbesondere zur Benutzung in Kraftfahrzeugen zur Einhandbedienung.- Der Behälter weist Arretiernocken für die Kassette auf, die sie gegen Herausfallen sichern und positionieren, und zwar unabhängig von der Aufbewahrungsposition der Kassette.

Fig. 1

EP 0 321 937 A2

## Behälter zur Aufbewahrung von Magnetbandkassetten

Die Erfindung betrifft einen Behälter zur Aufbewahrung von Magnetbandkassetten mit einem an einer Schmalseite offenen Gehäuse sowie mit einem Transportorgan zum Verlagern einer im Gehäuse befindlichen Kassette aus einer inneren Aufbewahrungsposition in eine äußere Entnahmeposition, in der ein Abschnitt der Kassette über die Gehäuseöffnung so weit hinausragt, daß sie zur Entnahme erfaßbar ist. Der Behälter ist insbesondere bestimmt zur Aufbewahrung von DAT-Kassetten ("Digital Audio Tape¨"), auf deren Standardabmessungen sich die Hersteller verständigt haben. Solche DAT-Kassetten haben eine Quadergrundform mit zwei einander gegenüberliegenden großen Seiten, nachstehend auch als Breitseiten" bezeichnet, zwei längeren zueinander parallelen Schmalseiten und zwei kürzeren zueinander parallelen Schmalseiten. Eine der Breitseiten weist zwei runde Eintiefungen auf, die symmetrisch bezüglich einer zu den kürzeren Schmalseiten parallelen Mittelebene angeordnet sind und bezüglich der dazu senkrechten und zu den längeren Schmalseiten parallelen Mittelebene etwas veretzt sind, derart, daß diese (gedachte) Symmetrieebene die Eintiefungen in ein kleineres und in ein größeres Segment unterteilt.

Ein Kassettenbehälter, bei dem das Transportorgan als Schieber ausgebildet ist, bildet den Gegenstand der EP-A-0 086 275. Bei diesem bekannten Behälter braucht der Schieber nur einen kurzen Weg zurückzulegen, da in der Entnahmeposition seine Frontwand wegschwenkt und eine eingelegte Kassette an dem aus dem Gehäuse herausragenden Ende erfaßt und parallel zu sich selbst herausgezogen bzw. eingelegt werden kann.

Aufgabe der Erfindung ist es, einen DAT-Kassettenbehälter zu schaffen, bei dem eine eingelegte Kassette bezüglich des Transportorgans positioniert wird und gegen Herausfallen gesichert wird; dies ist wichtig für die Verwendung des Behälters in einem Kraftfahrzeug, da die Einbauorientierung des Behälters von der Horizontalen abweichen kann und die Bedienung nur ein Minimum an Aufmerksamkeit beanspruchen darf. Zur Lösung dieser Aufgabe ist erfindungsgemäß vorgesehen, daß der Behälter mindestens ein Arretierorgan umfaßt, das in der Entnahmeposition in der einen oder, je nach der Einführungsrichtung der DAT-Kassette, der andern Eintiefung einrastbar ist und durch Einführen der Kassette oder Zug an der eingeführten Kassette quer zu deren Breitseiten auslenkbar ist.

Vorzugsweise ist der Behälter derart ausgebildet, daß er für die Aufnahme der DAT-Kassette mit deren beiden Eintiefungen in Bewegungsrichtung des Transportorgans hintereinanderliegend ausgebildet ist.

Das Transportorgan ist vorzugsweise ein im Gehäuse geführter Schieber, vorzugsweise mit einer Frontwand, die in der Entnahmeposition zum Exponieren des äußeren Endes der Kassette derart verlagerbar ist, daß diese parallel zu sich selbst herausziehbar ist. Diese Frontwand deckt dann zweckmäßigerweise in der Aufbewahrungsposition die Gehäuseöffnung ab. Die Frontwand kann einen Teil einer Frontwandbaugruppe bilden, die mit einem im Gehäuse geführten Schieberteil gelenkig verbunden ist. Zweckmäßig ist die Baugruppe in die verlagerte Position federvorgespannt. Das im Gehäuse geführte Schieberteil kann Kassettenpositionier-Wandungen aufweisen, die durch Rippen versteift und/oder mit Einführschrägen versehen sein können, wobei auch das Gehäuse Kassettenpositionierorgane aufweisen kann. Der Schieber kann ein- oder mehrteilig sein, und der Verlagerungsweg der Frontwandbaugruppe ist zweckmäßig durch einen Anschlag begrenzt.

Ferner ist es bevorzugt, zwischen Gehäuse und Transportorgan eine Feder vorzusehen, die das Transportorgan in die Entnahmeposition vorspannt, wobei das Transportorgan mittels einer manuell entriegelbaren Verriegelungsanordnung gegen die Federvorspannung im Gehäuse in seiner Aufbewahrungsposition gehalten wird. Die Verriegelungsanordnung ist vorzugsweise in einer Frontwand des Transportorgans angeordnet und umfaßt eine nach außen ragende Entriegelungstaste.

Vorzugsweise sind zwei Arretierorgane vorgesehen, von denen jedes einer der DAT-Kassettenbreitseiten zugeordnet ist. Die Arretierorgane können einander gegenüberliegen und/oder spiegelbildlich gleich ausgebildet sind. Es können auch zwei Paare symmetrisch angeordneter Arretierorgane vorgesehen sein, von denen jedes mit einer der vier mögli chen Einschuborientierungen einer Eintiefung ausgefluchtet ist. Die vier Arretierorgane können beispielsweise an unabhängig voneinander auslenkbaren Armen eines gemeinsamen, vorzugsweise einstückigen, vorzugsweise metallischen Bauteils ausgebildet sein.

Das Transportorgan weist vorzugsweise eine der Gehäuseöffnung gegenüberliegende Rückwand auf, an der anliegend die Kassette von dem Arretierorgan positioniert wird. An dieser Rückwand kann das Arretierorgan, beispielsweise eine elastische Klammer, befestigt sein, etwa durch Aufschnappen. Das Arretierorgan kann aber auch im wesentlichen starr und relativ zur Rückwand begrenzt verlagerbar sein.

Vorzugsweise wird das Arretierorgan von einem Nocken gebildet, der am Ende eines freien Armes angeordnet ist, welcher Arm elastisch auslenkbar sein kann und sich vorzugsweise in Bewegungsrichtung des Transportorgans erstreckt.

Das Arretierorgan weist vorzugsweise Schrägen auf, die das Einführen und Entnehmen einer Kassette erleichtern und/oder Toleranzen ausgleichen können.

Der Behälter weist vorzugsweise Hohlräume zwischen dem Gehäuse und dem Transportorgan auf, in denen Funktionsteile, etwa Vorspannfedern, Anschläge und dergleichen, untergebracht sein können.

Ausführungsbeispiele des Gegenstandes der Erfindung werden nachstehend unter Bezugnahme auf die beigefügten Zeichnungen im Detail erläutert.

Fig. 1 zeigt im Längsschnitt einen geöffneten Behälter gemäß der Erfindung,

Fig. 2 ist ein Längsschnitt in einer zur Schnittebene der Fig. 1 senkrechten Ebene, jedoch mit hochgeklappter Frontwandbaugruppe,

Fig. 3 ist ein Schnitt nach Linie 3-3 der Fig. 2,

Fig. 4 zeigt ähnlich Fig. 2 eine zweite Ausführungsform im Aufbewahrungszustand,

Fig. 5 stellt im Schnitt die Klammer für den Behälter nach Fig. 4 dar,

Fig. 6 zeigt ähnlich Fig. 1 eine weitere Ausführungsform,

Fig. 7 zeigt im Schnitt senkrecht zu dem der Fig. 6 den geschlossenen Behälter,

Fig. 8 stellt die Arretierorgane dieser Bauart perspektivisch dar,

Fig. 9 zeigt ähnlich Fig. 2 eine weitere Ausführungsform,

Fig. 10 stellt die Ruhelage des Arretierorgans dieser Bauart dar,

Fig. 11 zeigt schematisch eine weitere Bauart,

Fig. 12 zeigt perspektivisch deren Arretierorgane,

Fig. 13 bzw. 14 stellen perspektivisch bzw. in Seitenansicht eine weitere Ausführungsform von Arretierorganen dar,

Fig. 15 bzw. 16 zeigen zwei Positionen des Zusammenwirkens von Arretierorgan und Kassette,

Fig. 17 stellt eine Abwandlung der Ausführungsform nach Fig. 1 analog zu dieser dar, und

Fig. 18 zeigt perspektivisch im Ausschnitt eine Abwandlung der Ausführungsform nach Fig. 1 bzw. 17.

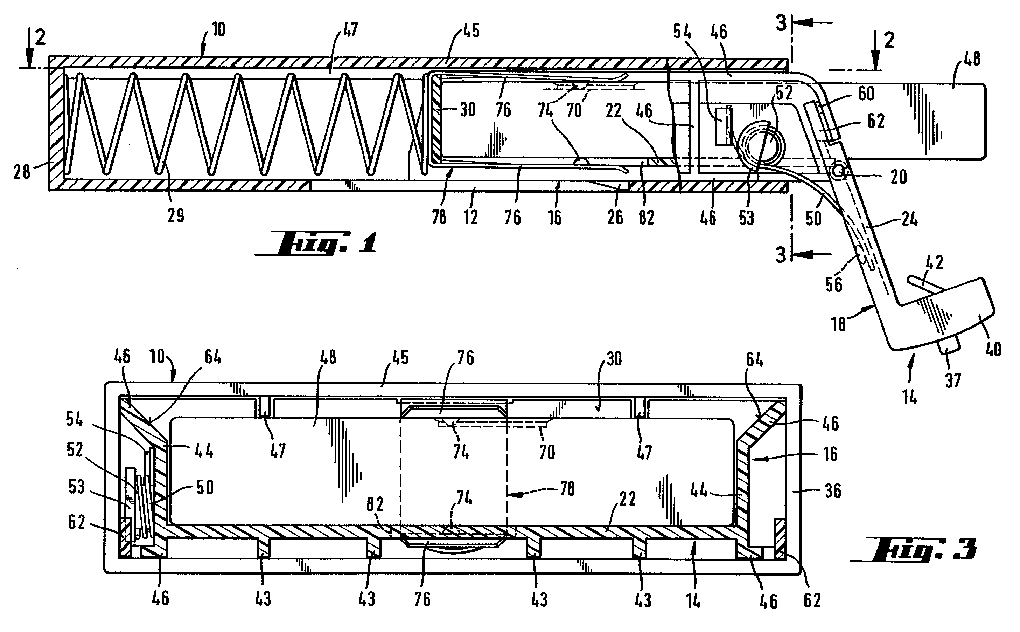

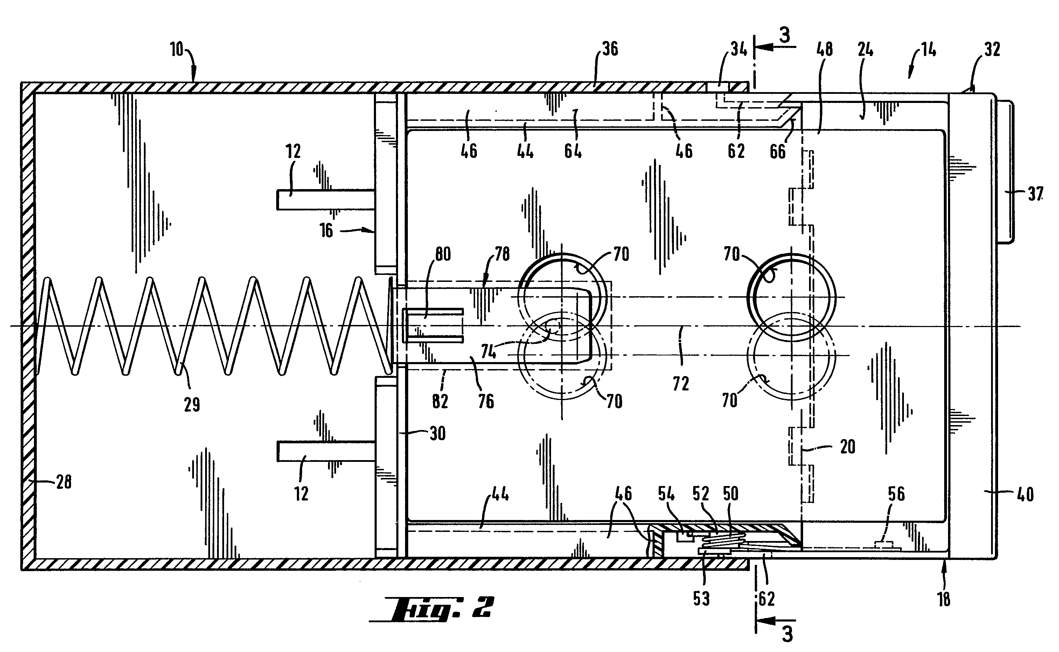

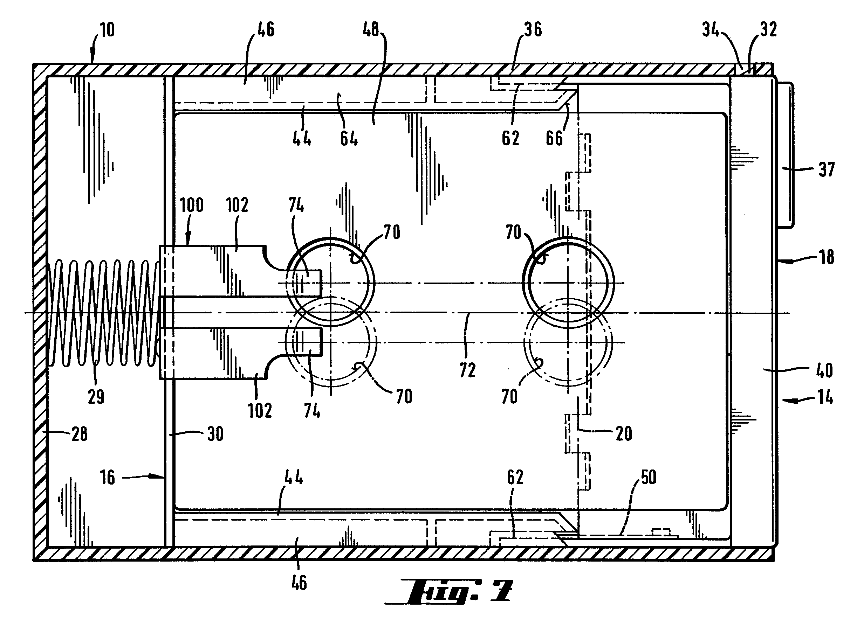

Zunächst wird die Ausführungsform nach Fig. 1 bis 3 erläutert. - Der Behälter umfaßt ein Kunststoffgehäuse 10 in Quaderform; Ober- und Unterseite können in an sich bekannter Weise mit zueinander komplementären Stapelvorsprüngen bzw. -

vertiefungen versehen sein, um Blöcke, zusammengesetzt aus gleichartigen Behältern, zu bilden. Der Gehäuseboden ist mit zwei zueinander parallelen Längsnuten oder -schlitzen 12 versehen. Im Gehäuse ist ein Schieber 14 gleitbeweglich zwischen einer inneren Endlage und einer äußeren Endlage geführt. Er umfaßt ein Führungsteil 16 und eine Frontwandbaugruppe 18, die mit dem Führungsteil mittels eines Scharniers 20 gelenkig verbunden ist, das etwa in der Ebene des Führungsteilbodens 22 und des Bodens 24 der Frontwandbaugruppe liegt. Auf der dem Gehäuseboden zugekehrten Seite weist das Führungsteil angeformte Nasen 26 auf, die in die Schlitze 12 des Gehäusebodens greifen und einen die äußere Schieberendstellung definierschlag bilden, wenn sie auf das äußere Schlitzende auflaufen. Eine Druckfeder 29 ist zwischen Gehäuserückwand 28 und Führungsteilrückwand 30 eingespannt und drückt den Schieber in die äußere Endstellung. Wird der Schieber eingeschoben, verriegelt er sich mittels eines Riegels 32 in einer Ausnehmung 34 der Gehäuseseitenwand 36; der Riegel läßt sich durch Betätigen einer Taste 37 lösen. Diese Verriegelungsmechanik ist in einen Hohlraum der Frontwand 40 eingelassen und bildet keinen Gegenstand der vorliegenden Erfindung, so daß eine detaillierte Beschreibung entfallen kann. Dasselbe gilt für einen Tastarm 42, der den Belegungszustand des Behälters abtastet und einen entsprechenden Anzeiger betätigt.

Der Führungsteilboden 22 ist durch dem Gehäuseboden zugekehrte Rippen 43 versteift, und dasselbe gilt für den Boden der Frontwandbaugruppe. Auch von den Seitenwandungen 44 des Führungsteils erstrecken sich Führungs- und Versteifungsrippen 46 nach außen. Auf diese Weise werden beidseits Hohlräume begrenzt, in deren einem eine Federanordnung untergebracht ist, die die Frontwandbaugruppe in die in Fig. 1 dargestellte abgeklappte Lage vorspannt, in der ein vorderes Ende einer eingelegten Kassette 48 frei erfaßbar ist. Die Federbaugruppe umfaßt eine Schenkelfeder 50, die mit ihrem Wickel auf einem an das Führungsteil angeformten Zapfen 52 sitzt, deren einer Arm sich an einem ebenfalls an das Führungsteil angeformten Widerlager 54 abstützt und deren anderer Arm einen an der Unterseite der Frontwandbaugruppe angebrachten Steg 56 hintergreift. Die abgeklappte Position der Frontwandbaugruppe wird durch einen Anschlag 60 an den Seitenwandungen 44 des Führungsteils festgelegt, an dem jeweils ein Arm 62 zur Anlage kommt, der sich von der Frontwandbaugruppe über das Scharnier hinaus erstreckt. Bei Überlastung geben die Arme 62 und/oder die Anschläge 60 nach, so daß eine Beschädigung infolge unsachgemäßer Handhabung vermieden wird.

Der Zapfen 52 hat einen äußeren Flansch 53, der das Herunterfallen des Federwickels verhindert; damit der Arm 62 an dem Zapfen vorbeigehen kann, ist dieser Flansch nur etwa auf 180° des Zapfenumfangs ausgebildet.

Demgemäß wird eine eingelegte Kassette 48 seitlich von den Seitenwandungen 44 positioniert. Unten ruht sie auf dem Führungsteilboden 22, und von oben wird sie durch an die Deckwandung 45 des Gehäuses innen angeformte Rippen 47 positioniert.

Um das Einlegen einer Kassette zu erleichtern, sind die Seitenwandungen 44 des Führungsteils bei 64 und 66 trichterartig abgeschrägt.

Der insoweit beschriebene Behälter ist funktionsfähig. Er wird jedoch erfindungsgemäß bezüglich der Handhabung verbessert. Zum einen würde, nach Betätigen der Taste 37, der Schieber ausgestoßen und die Kassette herauskatapultiert, wenn sie nicht von Hand gebremst würde. Zum anderen ist die Aufbewahrungsposition der Kassette zwar durch die Rückwand des Führungsteils definiert, doch könnte sich eine eingelegte Kassete unbemerkt wieder etwas nach außen bewegen, etwa bei Benutzung des Behälters in einem fahrenden Fahrzeug, und wenn dann der Benutzer die Frontwandbaugruppe hochklappt, kollidiert diese mit der Kassette.

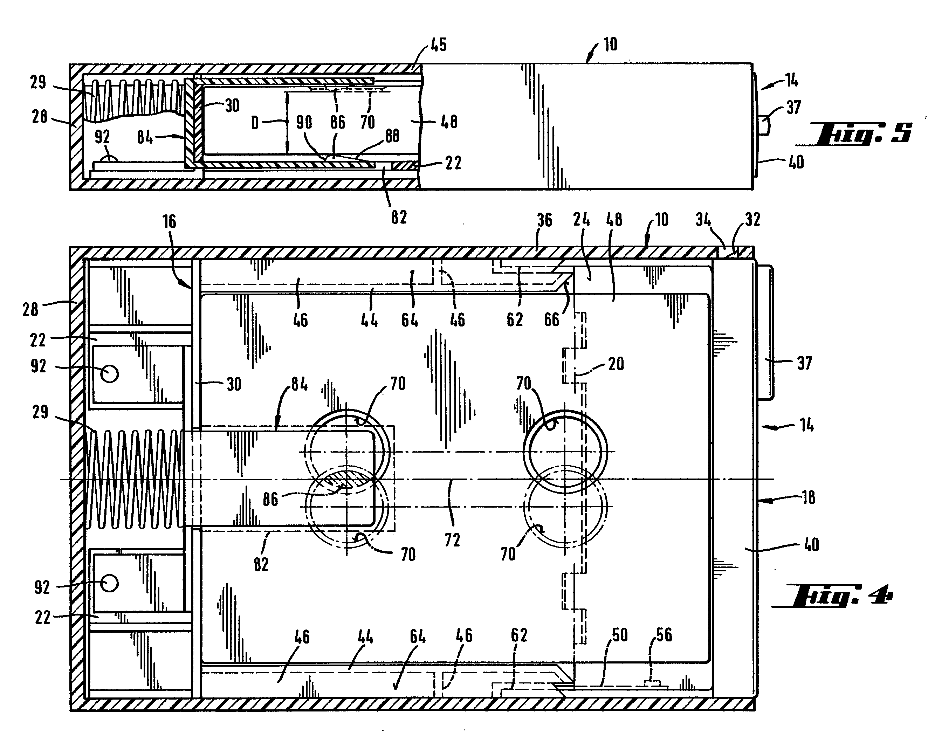

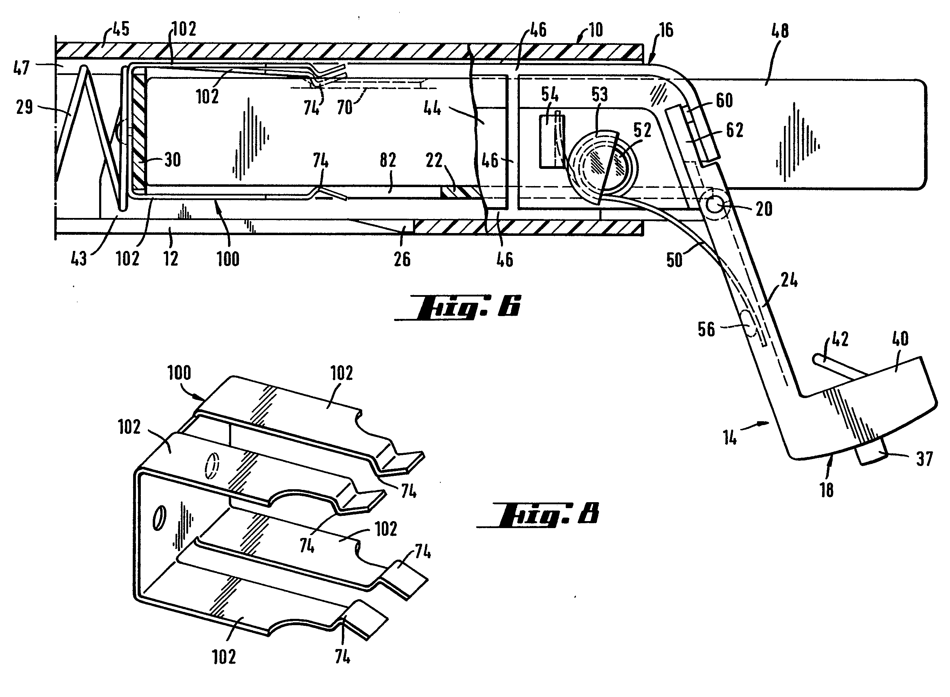

Erfindungsgemäß wird die Kassette in jeder möglichen Unterbringungsorientierung im Schieber lösbar arretiert. Kassetten des hier in Rede stehenden Typs weisen zwei runde Eintiefungen 70 auf, die etwas versetzt bezüglich der sich in Schieberbewegungsrichtung erstreckenden Symmetrieebene 72 angeordnet sind; wie in Fig. 2 erkennbar, überdecken sich die Projektionen der Eintiefungen über einen Winkelbereich von etwa 60°. In diesen Überdeckungsbereich hinein ragen Arretiernocken 74 von der Boden- und der Deckseite des Schiebers. Sie sind an den freien Armen 76 eines Blechwinkels 78 ausgebildet, beispielsweise spanlos herausgedrückt. Der Blechwinkel aus federelastischem Material ist auf die Rückwand 30 des Führungsteils aufgeschnappt, indem er von hinten aufgeschoben wird, wobei Verriegelungszungen 80 ausgelenkt werden, die dann vor der Innenseite der Rückwand 30 zurückfedern und den Sitz des Winkels 78 sichern. Die freien Enden der Winkelarme 76 sind etwas auswärts gebogen, um eine Kollision mit einer Kassette bei deren Einschub zu verhindern. Der deckseitige Arm 76 findet Platz zwischen den Rippen 47 an der Gehäusedeckwand; der bodenseitige Arm liegt in einer Aussparung 82 des Führungsteilbodens 22.

In Fig. 1 ist die Kassette 48 so eingelegt, daß die innere Aussparung 70 oben befindlich ist, so daß der obere Arretiernocken 74 eingreift, welcher deshalb in Fig. 1 nicht sichtbar ist. Der untere Nocken 74 liegt federnd an der Kassettenbreitseite an. Man erkennt, daß die Kassette in jeder beliebigen Orientierung einführbar und arretierbar ist.

Für die Entnahme genügt ein leichter Zug an der Kassette, um den eingerasteten Nocken 74 aus der Eintiefung 70 herauszuheben.

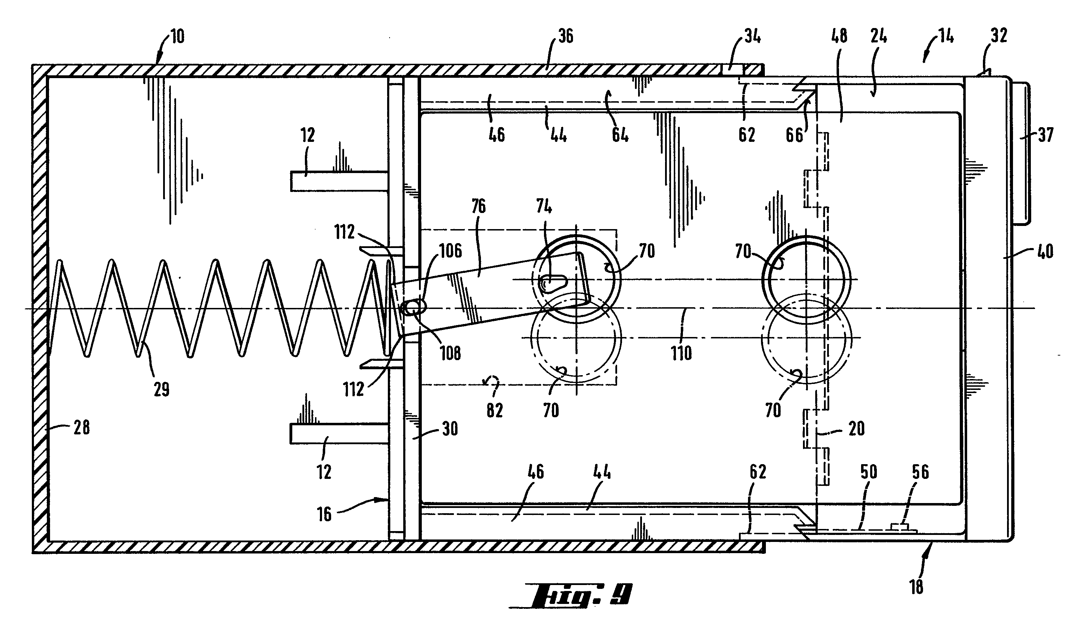

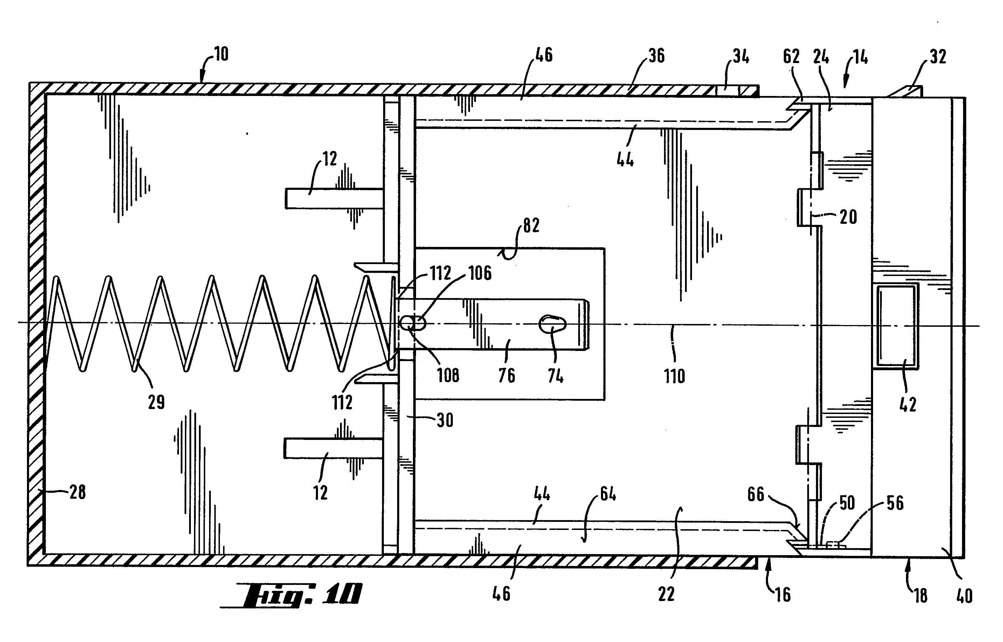

Bei dem Ausführungsbeispiel nach Fig. 4 und 5 hat der Behälter prinzipiell denselben Aufbau, so daß nur die Abweichungen von Fig. 1 bis 3 erläutert zu werden brauchen.

Anstelle des Blechwinkels ist hier ein Winkel 84 aus Kunststoff vorgesehen, an den Arretiernocken 86 mit doppel-kreissegmentförmigem Grundriß (schraffiert in Fig. 4) angeformt sind. Die Nocken 86 haben eine Einlaufschräge 88 mit sanfter Neigung und eine Arretierschräge 90 größerer Steilheit. Es ist wichtig, daß das Kunststoffmaterial des Winkels nur kurzzeitig elastisch deformiert wird, da es sonst durch Kaltfluß verformt würde. Deshalb ist der Abstand der Arme, gemessen zwischen den beiden Arretiernocken 86, gerade ebenso groß wie das Maß "D" von der Grundfläche der Kassette 48 bis zum Boden der Eintiefung 70, so daß der Winkel nur beim Einschieben oder Herausziehen der Kassette kurzzeitig aufgespreizt wird. Da andererseits die Lage der Kassette wie in der Ausführungsform nach Fig. 1 bis 3 durch den Führungsteilboden 22 einerseits, die nach innen einspringenden Rippen 47 an der Gehäusedeckwand andererseits in allen Einschuborientierungen der Kassette definiert ist, ist der Winkel 84 so montiert, daß er eine Schwenkbewegung entsprechend einer Arretiernockenhöhe ausführen kann. Zu diesem Zweck ist der Führungsteilboden 22 über die Rückwand 30 hinaus verlängert, und der Winkel 84 ist bei 92 mittels Nietstümpfen festgelegt, die beim Spritzen des Führungsteils an die Bodenverlängerung angeformt wurden. Dies ergibt eine hinreichende Flexibilität für die oben erläuterten Zwecke.

Bei der Erläuterung der weiteren Ausführungsformen wird nur noch auf die wesentlichen Abweichungen von den bereits beschriebenen Varianten eingegangen, da der grundsätzliche Aufbau des Behälters übereinstimmt.

Gemäß Fig. 6 bis 8 ist an die Schieberrückwand 30 ein Blechwinkel 100 mit vier federnd auslenkbaren Armen 102 angenietet; jeder Arm weist an seinem freien Ende eine Abwinkelung in Form eines Nockens auf. In jeder möglichen Einschuborientierung der Kassette 48 steht einer Eintiefung 70 einer der Nocken gegenüber, um die Kassette zu arretieren.

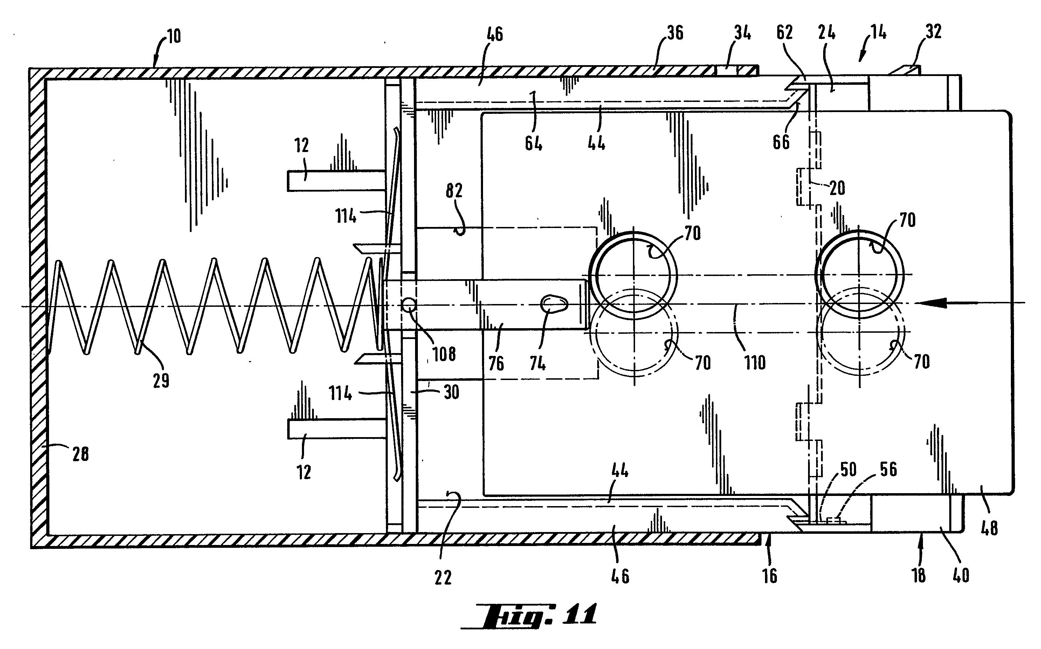

Bei der Ausführungsform nach Fig. 9 und 10 ist eine Klammer ähnlich wie in Fig. 1 vorgesehen. Die Klammer ist jedoch nicht an der Schieberrückwand 30 aufgeschnappt, sondern weist ein Langloch 106 auf, das auf einen an die Schieberrückwand angeformten Zapfen 108 gesteckt ist. Wenn sich keine Kassette im Schieber befindet, wirkt die Feder 29 auf die Klammerbasis und drückt sie in Anlage an die hintere Seite der Schieberrückwand. Die Klammer nimmt dabei eine Suchposition in der Längssymmetrieebene 110 des Schiebers ein (Fig. 10). Wird eine Kassette eingeschoben, so gelangt einer der an die freien Arme 76 der Klammer angeformten Nocken 74 in Eingriff mit einer Eintiefung 70, und durch die Keilform der aufeinanderstoßenden Berührungsflächen wird eine Auslenkkraft quer zur Einschubrichtung auf die Klammer übertragen, so daß die Klammer die in Fig. 9 dargestellte Position annimmt. Da die Klammer dabei um eine der Kanten 112 der Klammerbasis kippt, wird der Nocken -- was wegen des Langlochs möglich ist -- auch in Richtung Schieberrückwand verlagert; bei richtiger Abstimmung der Abmessungen, insbesondere der Breite zwischen den beiden Kanten, um die die Klammer kippen kann, hält der Nocken 74 dann die Kassette in dem dieser Rückwand nächstgelegenen Bereich der Eintiefung 70.

Ähnlich sind die Arretierorgane bei der Variante gemäß Fig. 11 und 12 aufgebaut, wobei allerdings kein Langloch vorgesehen ist, und die Rückstellfedern, die die Klammer in die Suchlage zurückbringen, sind als Arme 114 an die Klammer selbst angeformt.

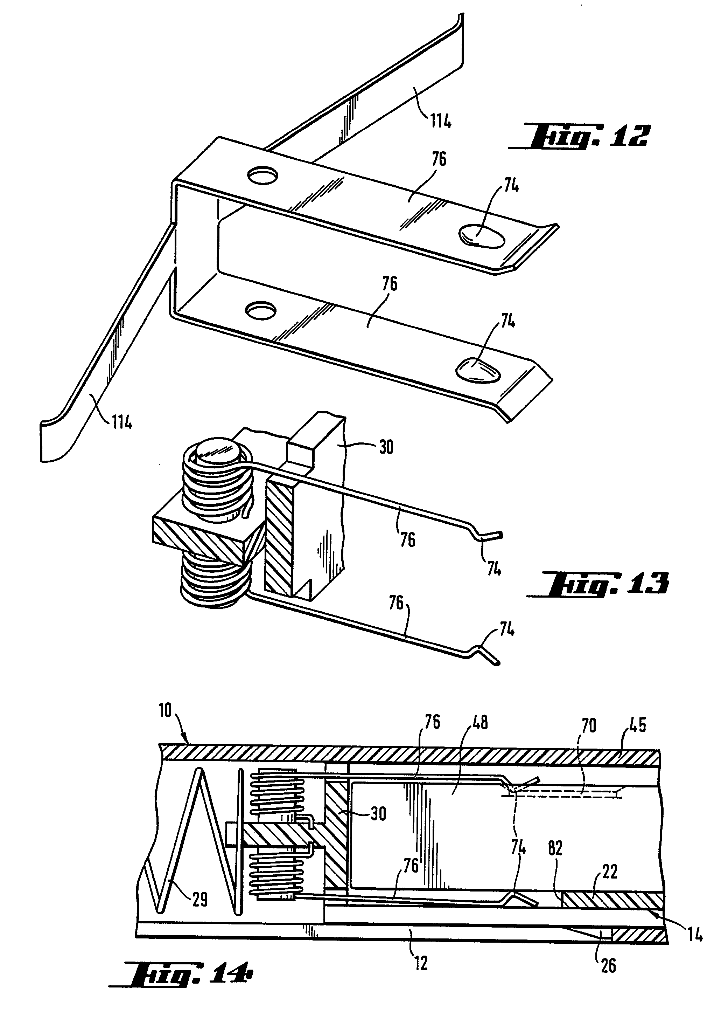

Bei der Variante nach Fig. 13, 14 sind die Nocken 74 an Drahtfedern 76 ausgebildet; diese können somit ihre Rückstellkraft in die Suchlage selbst aufbringen.

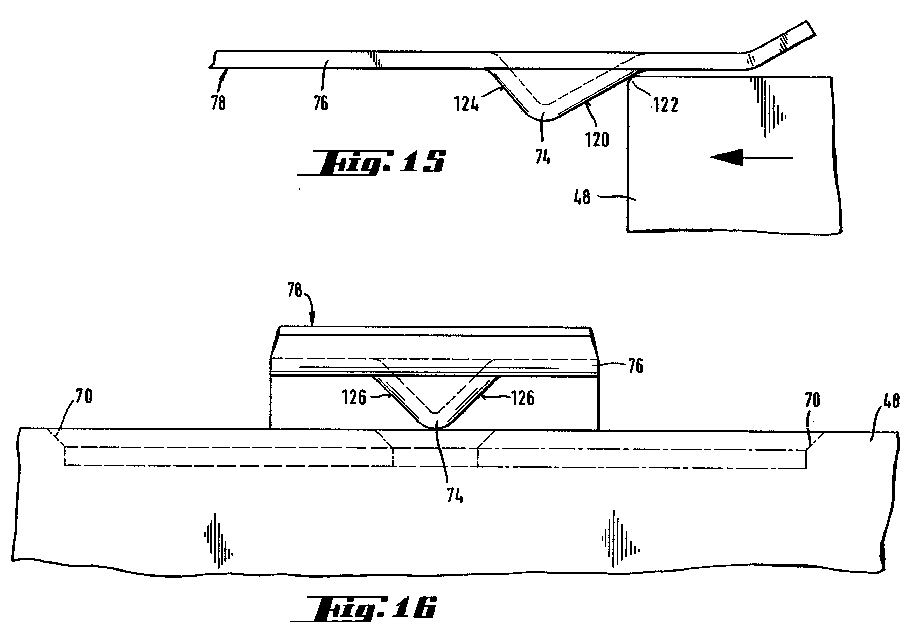

Fig. 15 zeigt stark vergrößert das Profil eines Arretiernockens 74, gesehen quer zur Einschubrichtung. Man erkennt eine sanft ansteigende Keilfläche 120, auf die die Kante 122 der Kassette auftrifft, und eine steile Arretierkeilfläche 124; gleiche Steilheit haben auch die Flanken 126 des Arretiernockens, gesehen in Einschubrichtung gemäß Fig. 16.

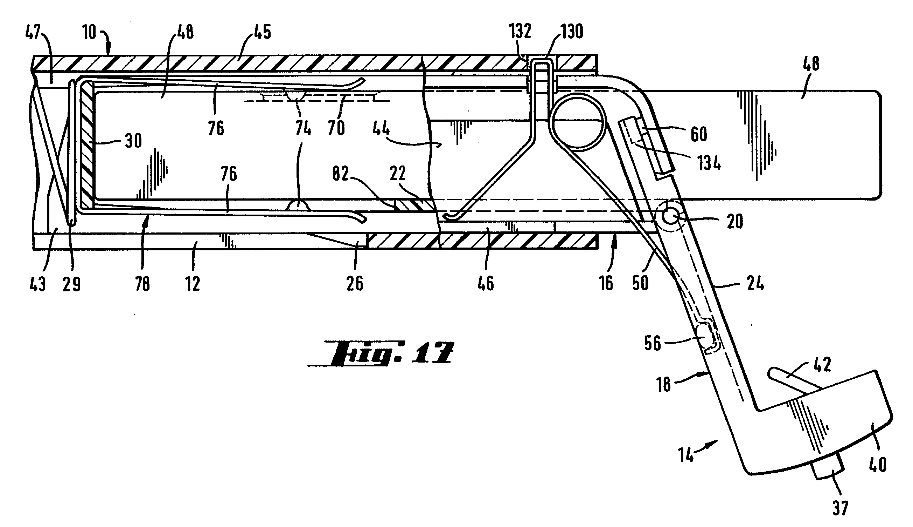

Fig. 17 stellt eine vorteilhafte Abänderung des Behälters nach Fig. 1 dar. Die Feder 50 sitzt mit ihrem Wickel nicht auf einem Zapfen, sondern dieser ist frei in dem Hohlraum zwischen Schieber und Gehäuse beweglich. Ferner weist die Feder noch eine Schlaufe 130 auf, die -- wenn der Schieber in der Entnahmeposition aufklappt -- in einen Gehäusedurchbruch 132 hineinverlagert wird. Somit ist der Schieber in der Entnahmeposition blokkiert, und erst wenn durch Hochklappen der Frontwandbaugruppe die Federschlaufe wieder zurückgezogen wird, indem der Anschlagarm 134 auf die Feder drückt, wird der Schieber für den Einschub freigegeben.

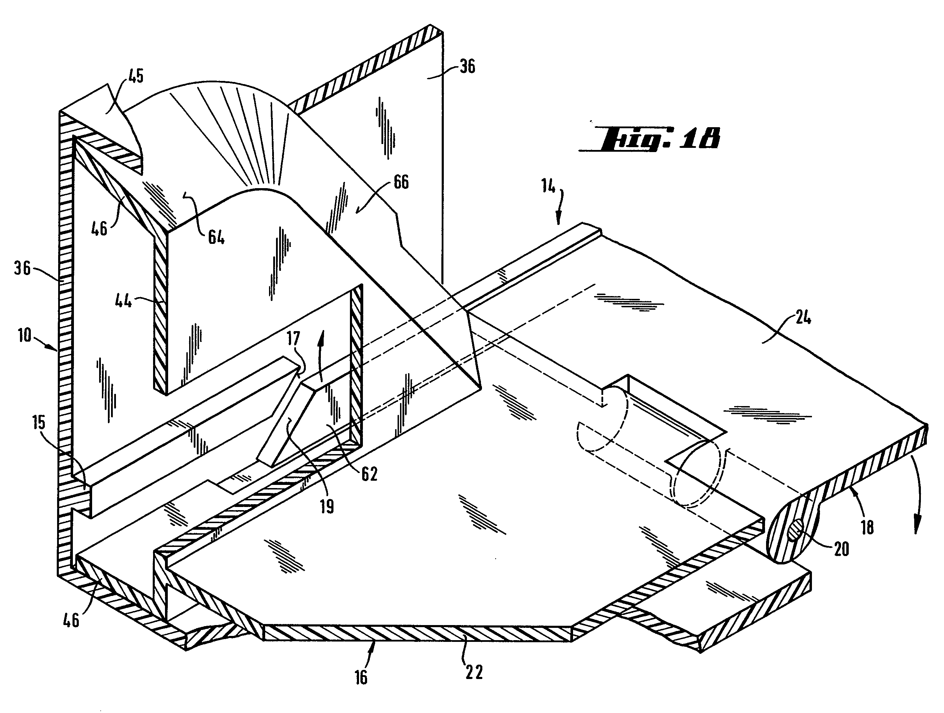

Fig. 18 zeigt in Perspektive und weggebrochen ein Detail einer Variante, die bei den Ausführungsbeispielen nach Fig. 1 oder 17 anwendbar ist. Der am Gelenk geknickte Schieber wird von der Feder 50 derart vorgespannt, daß die Reibungsverhältnisse beim Ausschub aus dem Gehäuse störend werden können, und zwar umso stärker, wenn die Ausschubfeder 29 zum Zweck des größeren Komforts beim Einschub des Schiebers relativ weich ausgebildet ist. Die Reibungsverhältnisse werden günstiger, wenn das freie Ende des Hebelarms 62 unter einer Rippe 15 geführt wird, die an die Gehäuseseitenwandung 36 auf einer oder beiden Seiten des Schiebers angeformt ist. Die Rippe endet an der Stelle, wo der Hebelarm hochklappen können soll, um die Frontwandbaugruppe in die Entnahmeposition abzuklappen. Eine Einlaufschräge 17 an der Rippe und eine entsprechende Gegenschräge 19 am Hebelarm 62 verhindern, daß der Hebelarm auf das freie Ende der Rippe aufstößt.

## Ansprüche

1. Behälter zur Aufbewahrung von Magnetbandkassetten, die auf einer Breitseite zwei gleichgroße, bezüglich einer Längssymmetrieebene um weniger als ihren Radius versetzte runde Eintiefungen (70) aufweisen, welcher Behälter ein im wesentlichen quaderförmiges, an einer Schmalseite offenes Gehäuse (10) umfaßt sowie ein Transportorgan (14) zum Verlagern einer im Gehäuse befindlichen Kassette aus einer inneren Aufbewahrungsposition in eine äußere Entnahmeposition, in der ein Abschnitt der Kassette über die Gehäuseöffnung so weit hinausragt, daß sie zur Entnahme erfaßbar ist, dadurch gekennzeichnet, daß der Behälter mindestens ein Arretierorgan (74, 86) umfaßt, das in der Entnahmeposition in der einen oder, je nach Einführungsrichtung der Kassette, der anderen Eintiefung (70) einrastbar ist und durch Einführen der Kassette oder Zug an der eingeführten Kassette quer zu deren Breitseiten auslenkbar ist.

2. Behälter nach Anspruch 1, dadurch gekennzeichnet, daß er für die Aufnahme der Kassette mit beiden Eintiefungen in Bewegungsrichtung des Transportorgans hintereinanderliegend ausgebildet ist.

3. Behälter nach Anspruch 1 oder 2, dadurch gekennzeichnet, daß das Transportorgan ein im Gehäuse geführter Schieber (14) ist.

4. Behälter nach einem der vorangehenden Ansprüche, dadurch gekennzeichnet, daß mit dem Transportorgan und dem Gehäuse eine Federanordnung (29) in Wirkverbindung steht, die das Transportorgan in die Entnahmestellung vorspannt, und daß eine Verriegelungsanordnung vorgesehen ist, die das Transportorgan gegen die Federvorspannung im Gehäuse hält und manuell entriegelbar ist.

5. Behälter nach einem der vorangehenden Ansprüche, dadurch gekennzeichnet, daß das Arretierorgan symmetrisch bezüglich der Längssymmetrieebene angeordnet ist.

6. Behälter nach einem der vorangehenden Ansprüche, dadurch gekennzeichnet, daß er zwei Arretierorgane (74, 86) aufweist, von denen jedes einer der beiden Breitseiten der Kassette zugeordnet ist.

7. Behälter nach einem der vorangehenden Ansprüche, dadurch gekennzeichnet, daß das Arretierorgan eine Grundrißabmessung aufweist, die höchstens ebenso groß ist wie die Segmente der Eintiefungen, die über die Längssymmetrieebene hinausreichen.

8. Behälter nach einem der vorangehenden Ansprüche, dadurch gekennzeichnet, daß das Transportorgan eine der Gehäuseöffnung gegenüberliegende Rückwand (30) aufweist, und daß das Arretierorgan die Kassette an dieser Rückwand anliegend positioniert.

9. Behälter nach einem der vorangehenden Ansprüche, dadurch gekennzeichnet, daß das Arretierorgan am Transportorgan angeordnet ist.

10. Behälter nach einem der vorangehenden Ansprüche, dadurch gekennzeichnet, daß das Arretierorgan in Richtung parallel zur Kassettenbreitseite im wesentlichen starr ist.

11. Behälter nach einem der Ansprüche 1 bis 9, dadurch gekennzeichnet, daß das Arretierorgan parallel zur Kassettenbreitseite begrenzt verlagerbar ist.

12. Behälter nach einem der vorangehenden Ansprüche, dadurch gekennzeichnet, daß das Arretierorgan eine erste Schrägfläche aufweist, auf die eine Kassettenkante beim Einführen auftrifft.

13. Behälter nach einem der vorangehenden Ansprüche, gekennzeichnet durch eine manuell lösbare Rasteinrichtung für die Entnahmeposition des Transportorgans.

14. Behälter nach einem der vorangehenden Ansprüche, gekennzeichnet durch Distanzierungsmittel, die zwischen einer eingelegten Kassette und der inneren Begrenzung des Gehäuses Räume für die Auslenkung des Arretierorgans definieren.

15. Behälter nach einem der vorangehenden Ansprüche, gekennzeichnet durch Distanzierungsmittel (46) zwischen kassettenpositionierenden Seitenwandungen des Transportorgans und Gehäuseseitenwandungen, wodurch Hohlräume definiert werden.

**Fig. 1**

**Fig. 3**

EP 0 321 937 A2

Fig. 2

Fig: 5

Fig: 4

EP 0 321 937 A2

EP 0 321 937 A2

**Fig. 6**

**Fig. 8**

Fig. 1

**Fig. 9**

Fig. 10

EP 0 321 937 A2

Fig. 11

_Fig. 12_

_Fig. 13_

_Fig. 14_

Fig. 15

Fig. 16

_Fig: 17_

EP 0 321 937 A2

Fig. 18

EP 0 321 937 A2